(19) Europäisches Patentamt
European Patent Office
Office européen des brevets

(11) Numéro de publication: **0 151 327 B1**

(12) # FASCICULE DE BREVET EUROPEEN

(45) Date de publication de fascicule du brevet: **23.10.91**

(21) Numéro de dépôt: **84201948.1**

(22) Date de dépôt: **28.12.84**

(51) Int. Cl.[5]: **C08K 5/00**, C08K 13/02, C08L 23/02, //(C08K5/00,5:13, 5:37,5:53),(C08K13/02,3:30, 5:13,5:37,5:53)

(54) **Compositions stabilisées à base de polymères d'alpha-oléfines.**

(30) Priorité: **06.01.84 FR 8400324**

(43) Date de publication de la demande: **14.08.85 Bulletin 85/33**

(45) Mention de la délivrance du brevet: **23.10.91 Bulletin 91/43**

(84) Etats contractants désignés: **AT BE DE FR GB IT NL**

(56) Documents cités:
**FR-A- 1 268 942**
**US-A- 4 075 163**
**US-A- 4 349 468**

(73) Titulaire: **SOLVAY & Cie (Société Anonyme)**
**Rue du Prince Albert, 33**
**B-1050 Bruxelles(BE)**

(72) Inventeur: **van Asbroeck, Roger**
**Langerrodestraat, 39**
**B-3055 Neerijse(BE)**
Inventeur: **Blanc, Serge**
**Clos des Trigonelles, 3**
**B-1120 Bruxelles(BE)**

(74) Mandataire: **Husemann, Claude et al**
**SOLVAY & CIE Département de la Propriété Industrielle 310, Rue de Ransbeek**
**B-1120 Bruxelles(BE)**

**EP 0 151 327 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des compositions stabilisées à base de polymères d'alpha-oléfines. Elle concerne plus particulièrement des compositions à base de polymères du propylène stabilisées contre la dégradation engendrée au contact de liquides oxydants et notamment au contact de ceux contenant des produits lessiviels.

On sait que toutes les polyoléfines présentent l'inconvénient de se dégrader par suite de phénomènes d'oxydation qui sont accélérés sous l'effet de divers facteurs. Cette dégradation entraîne un accroissement de la coloration et une diminution des propriétés mécaniques des objets façonnés à partir de ces polyoléfines.

L'incorporation, aux polyoléfines, de systèmes stabilisants contenant des antioxydants phénoliques, constitue un moyen connu de s'opposer avec efficacité à l'apparition de ces phénomènes.

De manière conventionnelle, ces systèmes stabilisants contiennent en outre d'autres composés, qui accroissent souvent de façon synergétique l'efficacité des antioxydants phénoliques. Il peut s'agir notamment d'esters dialkylés d'un acide thiodialkanoïque, tels que les dilauryl- et distéarylthiodipropionate, de phosphites organiques tels que les trialkylphosphites et les diphosphites cycliques dérivés du pentaérythritol, de phosphonites, tels que les tétrakisphényl-biphénylène diphosphonites ainsi que de certains mélanges de ces composés (voir par exemple brevet BE-A-774 363 de SANDOZ et Kunststoffe, vol.67, 1977, n°3, pages 151 à 153).

Enfin, la stabilité peut encore être améliorée par l'adjonction de sels métalliques tels que le stéarate de calcium.

Certaines applications des polyoléfines impliquent toutefois leur mise en contact prolongée à température relativement élevée avec des milieux particulièrement agressifs. Il en est ainsi par exemple lorsqu'elles sont moulées sous forme de pièces destinées 2 équiper des appareils industriels et domestiques, notamment des pompes, des lessiveuses et des lave-vaisselle, dans lesquels elles sont en présence de liquides oxydants chauds, plus particulièrement de ceux contenant des produits lessiviels et des détersifs contenant des composés extrêmement oxydants.

Quelques systèmes stabilisants connus s'opposent avec une efficacité plus ou moins satisfaisante à la dégradation engendrée par le contact des polyoléfines avec certains liquides oxydants. Toutefois, aucun de ces systèmes ne s'est révélé capable de s'opposer avec efficacité aux phénomènes de dégradation engendrés par tous les types de liquides oxydants, en particulier par ceux contenant n'importe quel produit lessiviel, qu'il se présente sous forme solide ou liquide, et quelle que soit sa composition et sa teneur en agents oxydants.

La présente invention vise à fournir de nouvelles compositions polyoléfiniques stabilisées capables de résister à l'action oxydante de n'importe quel liquide oxydant.

L'invention concerne à cet effet des compositions stabilisées à la dégradation par les liquides oxydants à base de polymères d'alpha-oléfines contenant un antioxydant phénolique (a), un phosphonite (b) et un stabilisant soufré (c), ce dernier étant choisi parmi

(c2) les associations d'un sulfure métallique (c21) avec un ester dérivé de polyols aliphatiques et d'acides alkylthiodipropioniques (c1)

(c3) les associations d'un sulfure métallique (c21) avec un polysulfure organique (c22).

Les polymères d'alpha-oléfines entrant dans les compositions stabilisées selon l'invention sont des polymères contenant au moins 50 % molaires et de préférence au moins 75 % molaires d'oléfines à insaturation terminale dont la molécule contient de 2 à 18 et de préférence de 2 à 6 atomes de carbone telles que l'éthylène, le propylène, le butène-1, le pentène-1, les méthylbutènes-1, l'hexène-1 et les 3- et 4-méthylpentènes-1. Il s'agit plus particulièrement de polymères contenant des atomes de carbone tertiaire tels que les polymères cristallins fortement isotactiques du butène-1, du 4-méthylpentène-1, et tout particulièrement du propylène.

Il peut s'agir également de copolymères de ces alpha-oléfines entre elles et/ou avec des dioléfines comprenant de 4 à 18 atomes de carbone, telles que des dioléfines aliphatiques non conjuguées comme par exemple l'hexadiène-1,4 ou telles que des dioléfines alicycliques ayant un pont endocyclique comme le dicyclopentadiène par exemple.

Il peut s'agir enfin de copolymères appelés à blocs qui consistent en des successions de segments de chaîne à longueurs variables, chaque segment étant constitué d'un homopolymère d'une alpha-oléfine ou d'un copolymère statistique comprenant une alpha-oléfine et au moins un comonomère choisi parmi les alpha-oléfines et les dioléfines.

Les meilleurs résultats sont obtenus avec les polymères contenant au moins 50 % en poids et de préférence au moins 75 % en poids de propylène.

Les compositions polyoléfiniques stabilisées selon l'invention peuvent aussi être à base de mélanges de deux ou plusieurs polymères tels que décrits ci-dessus, ainsi que d'autres polymères compatibles avec ces derniers.

Les polymères utilisables peuvent être préparés selon les méthodes connues de polymérisation des alpha-oléfines à basse pression. En particulier, les homopolymères cristallins fortement isotactiques du propylène peuvent être préparés en présence de systèmes catalytiques stéréospécifiques à base de composés organométalliques et de chlorures de titane se trouvant à une valence inférieure à sa valence maximale.

L'antioxydant phénolique (a) entrant dans les compositions stabilisées selon l'invention peut être choisi avantageusement dans le groupe comprenant les mono-, poly- et thiobis-phénols alkylés et dans le groupe comprenant les polyesters phénoliques.

A titre d'exemples de monophénols alkylés, on peut citer le 2,6-di-tert-butyl-p-crésol et le (3,5-di-tert-butyl-4-hydroxyphényl) propionate de n-octadécyle.

A titre d'exemples de polyphénols alkylés, on peut citer le tétrakis méthylène (3,5-di-tert-butyl-4-hydroxy) dihydrocinnamate méthane, le téréphtalate de 2,2'-méthylène bis (4-méthyl-6-tert-butylphénol), le 2,6-bis-(2'-hydroxy-3-tert-butyl-5'-méthyl-benzyl) 4-méthylphénol, l'isocyanurate de tris-(3,5-di-tert-butyl-4-hydroxy) benzyle et l'isocyanurate de tris-(2,6-diméthyl-3-hydroxy-4-tert-butyl)benzyle.

A titre d'exemples de thiobisphénols alkylés, on peut citer le 4,4'-thiobis-6-tert-butyl-m-crésol et le 4,4'-thiobis-6-tert-butyl-o-crésol.

A titre d'exemple de polyester phénolique, on peut citer le téréphtalate de 2,2'-méthylène-bis-(4-méthyl-6-tert-butylphénol).

L'antioxydant phénolique (a) est choisi de préférence parmi les polyphénols alkylés et parmi les polyesters phénoliques, les meilleurs résultats ayant été enregistrés avec l'isocyanurate de tris(2,6-diméthyl-3-hydroxy-4-tert-butyl)benzyle et avec le téréphtalate de 2,2'-méthylène-bis-(4-méthyl-6-tert-butylphénol).

Les compositions stabilisées selon l'invention contiennent également un phosphonite (b). Ce phosphonite peut être choisi parmi les polyphénylène diphosphonites et leurs dérivés substitués. Des exemples de pareils composés figurent dans le brevet BE-A-774 363 de SANDOZ. On peut citer en particulier les 4,4'-biphénylènediphosphonites et les 4,4',4"-p-terphénylène diphosphonites de tétrakis (isooctyle), de tétrakis (2,4-di-tert-butylphényle) et de tétrakis (3-nonylphényle).

Un phosphonite (b) tout particulièrement préféré est le 4,4'-biphénylène diphosphonite de tétrakis (2,4-di-tert-butylphényle).

Selon l'invention, les compositions stabilisées contiennent également un stabilisant soufré (c) choisi parmi

(c2) les associations d'un sulfure métallique (c21) avec un ester dérivé de polyols aliphatiques et d'acides alkylthiodipropioniques (c1)

(c3) les associations d'un sulfure métallique (c21) avec un polysulfure organique (c22).

Des sulfures métalliques (c21) utilisables dans l'association (c2) ou (c3) sont les sulfures de métaux du Groupe IIa du Tableau Périodique des éléments; de préférence, on utilise le sulfure de zinc.

A titre d'exemples d'esters (c1) dérivés de polyols aliphatiques et d'acides alkylthiodipropioniques utilisables en association (c2) avec les sulfures métalliques (c21), on peut citer l'octaméthylène-bis(3-dodécylthiopropionate), le sulfure de bis(éthylène-3-octadécylthiopropionate) et le tétrakis(3-thiododécylpropionate) de pentaérythritol, ce dernier étant particulièrement préféré.

Des polysulfures organiques (c22) utilisables en association (c3) avec les sulfures métalliques (c21) sont les disulfures de dialkyle. A titre d'exemples de disulfures de dialkyle préférés, on peut citer le disulfure de dilauryle et le disulfure de distéaryle.

L'utilisation des associations (c3) est tout particulièrement préférée à titre de stabilisant soufré (c).

Les compositions stabilisées selon l'invention peuvent également contenir, à titre optionnel, un phosphite organique (d) et un agent antiacide (e).

Le phosphite organique (d) pouvant être incorporé dans les compositions stabilisées selon l'invention peut être avantageusement choisi, d'une part, parmi les trialkyl- et les trialkylarylphosphites et, d'autre part, parmi les diphosphites cycliques dérivés du pentaérythritol. Des mélanges de ces phosphites peuvent également être avantageusement utilisés.

A titre d'exemples de trialkyl- et trialkylarylphosphites, on peut citer les trinonyl-, tri(nonylphényl)- et tri-(2,4-di-tert-butyl-5-méthyl)phénylphosphites.

A titre d'exemples de diphosphites cycliques dérivés du pentaérythritol, on peut citer le diphosphite de distéarylpentaérythritol et le diphosphite de bis(2,4-di-tert-butylphényl)pentaérythritol.

Le phosphite organique (d) est choisi de préférence parmi les diphosphites cycliques dérivés du

pentaérythritol, les meilleurs résultats ayant été enregistrés avec le diphosphite de bis(2,4-di-tert-butylphényl)pentaérythritol.

On a constaté de manière surprenante que la présence conjointe d'un phosphite organique (d) et d'un stabilisant soufré (c) constitué par une association (c3) telle que définie plus haut dans les compositions stabilisées selon l'invention leur confère une résistance exceptionnelle à l'action dégradante des produits lessiviels fournis sous forme liquide.

L'agent anti-acide (e) pouvant être incorporé dans les compositions stabilisées selon l'invention a pour fonction principale de neutraliser les résidus catalytiques éventuellement corrosifs qui peuvent subsister, à des teneurs variables dans le polymère entrant dans ces compositions. L'incorporation de cet agent anti-acide peut être particulièrement souhaitable dans le cas où le polymère entrant dans ces compositions est un polymère du propylène obtenu en présence d'un système catalytique comprenant ou préparé à l'intervention d'un chlorure de titane.

A titre d'exemples d'agents anti-acide, on peut citer notamment des composés minéraux à caractère basique, tels que les oxydes et les carbonates de calcium, de magnésium et de zinc, et des sels de ces mêmes métaux et d'acides aliphatiques monocarboxyliques saturés ayant de 6 à 30 atomes de carbone tels que par exemple les acides stéarique, palmitique et 2-éthylhexanoïque. Parmi tous ces agents, on préfère utiliser les stéarates de zinc et de calcium, et tout particulièrement ce dernier, parce qu'il améliore encore la stabilité des compositions.

Les ingrédients (a), (b), (c) et éventuellement (d) et (e) sont utilisés aux doses stabilisantes usuelles. Ces doses sont habituellement comprises entre 0,001 et 10 % en poids des polymères d'alpha-oléfines entrant dans la composition et de préférence entre 0,005 et 5 %. Plus particulièrement, ces doses sont comprises entre 0,01 et 1 %.

En ce qui concerne l'incorporation du sulfure métallique (c21) dans les compositions, on a remarqué toutefois que les meilleurs résultats sont enregistrés avec des doses de cet additif situées dans la partie supérieure des intervalles sus-mentionnés, en particulier avec des doses de l'ordre de 1 %.

Outre le ou les polymères, les ingrédients (a), (b) et (c) et les éventuels phosphite organique (d) et agent anti-acide (e), les compositions stabilisées selon l'invention peuvent contenir d'autres additifs usuels tels que, par exemple, d'autres antioxydants, d'autres polymères, des agents facilitant la mise en oeuvre, des agents renforçants, des pigments, lubrifiants, charges, agents anti-statiques, etc.

Les ingrédients (a), (b), (c) et optionnels (d) et (e), ainsi que les autres additifs éventuels peuvent être incorporés au polymère de toute façon connue en soi, par exemple en imprégnant le polymère en poudre ou en granules au moyen d'une solution de ces ingrédients ou encore en mélangeant une solution ou une suspension du polymère avec une solution de ces ingrédients. L'incorporation peut être réalisée par exemple, soit dans un mélangeur ou un broyeur où le solvant est évaporé, soit par malaxage sur des cylindres chauffés ou par extrusion d'un mélange du polymère et de ces ingrédients. Les compositions stabilisées selon l'invention sont aptes à la mise en oeuvre par tous les procédés classiques de transformation des matières plastiques, et plus particulièrement par injection. Ces compositions conviennent pour la fabrication de toutes espèces d'objets façonnés et plus particulièrement de pièces injectées.

Les compositions stabilisées selon l'invention se caractérisent par une résistance exceptionnelle à la dégradation oxydante à long terme engendrée par le contact des objets façonnés à partir d'elles avec des liquides oxydants, en particulier avec des liquides oxydants chauds contenant des produits lessiviels de toutes natures. Ainsi, ces compositions ne résistent pas seulement exceptionnellement bien à l'action oxydante des produits détersifs en poudre conventionnels, mais aussi à l'action de produits contenant des oxydants indirects comme l'hypochlorite de soude (eau de Javel) et à l'action des nouveaux détersifs liquides récemment apparus sur le marché des produits lessiviels.

L'invention est illustrée par les exemples ci-après.

Exemple 1

On a préparé une composition polyoléfinique stabilisée par mélange à sec des constituants suivants :

- 100 parties en poids d'un copolymère "à blocs" du propylène et de l'éthylène contenant environ 8 % en poids d'éthylène polymérisé commercialisé par Solvay & Cie sous la marque ELTEX®P RS001P;
- 0,03 partie en poids de tétrakis(2,4-di-tert-butyl-phényl)4,4'biphénylène diphosphonite

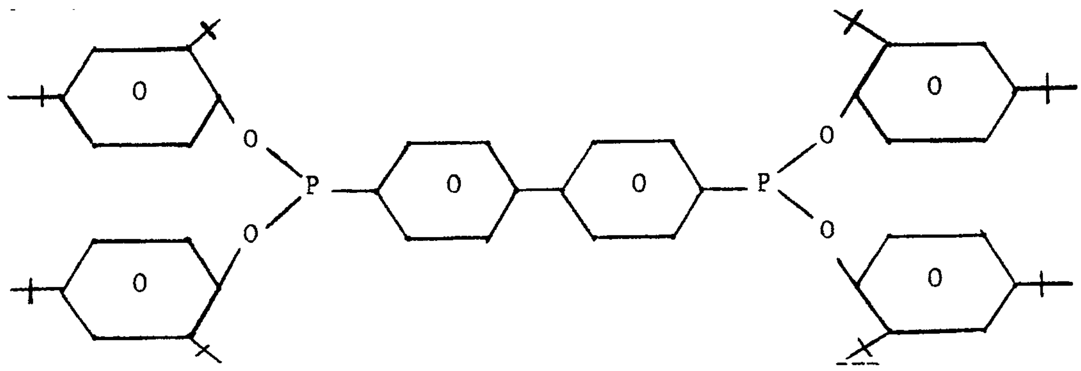

commercialisé par Ciba-Geigy sous la marque IRGAFOS®PEPQ;

- 0,1 partie en poids de téréphtalate de 2,2'méthylène-bis(4-méthyl-6-tert-butylphénol)

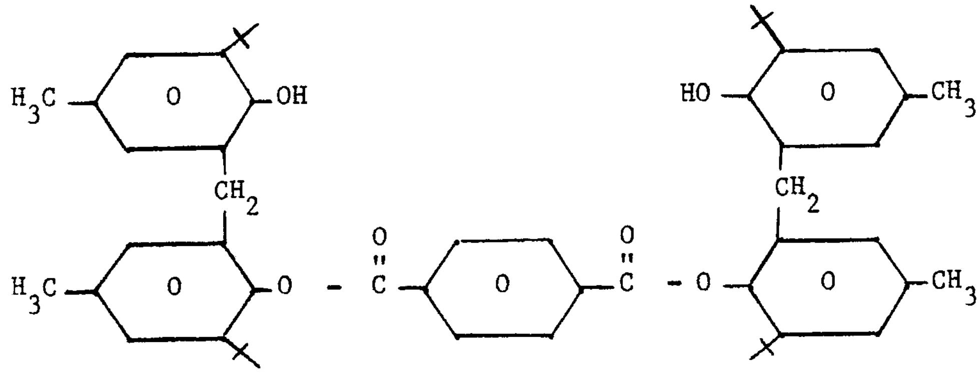

commercialisé par la Société Française d'Organosynthèse sous la dénomination HPM12;

- 0,15 partie en poids de disulfure de distéaryle

$C_{17}H_{35}$ - S - S - $C_{17}H_{35}$

commercialisé par Hoechst sous la dénomination TMSE 10;

- 1 partie en poids de sulfure de zinc (produit SACHTOLITH®HD de Sacht Leben);
- 0,1 partie en poids de diphosphite de bis(2,4-di-tert-butylphényl) pentaérythritol

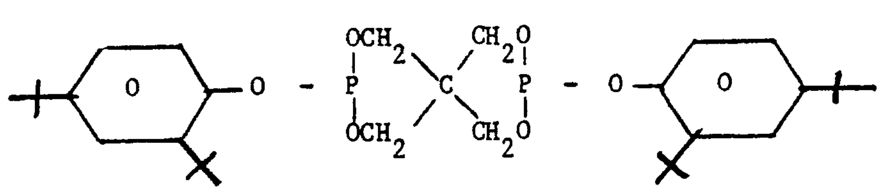

commercialisé par Borg-Warner sous la marque WESTON®626;

- 0,1 partie en poids de stéarate de calcium (produit Radiastab 1060 de OLEOFINA).

Cette composition stabilisée (1) a été granulée dans une extrudeuse monovis et les granules ont été transformées par moulage par injection en plaquettes de 2 mm d'épaisseur.

Ces plaquettes ont été immergées pendant 500 heures dans des bains aqueux des produits lessiviels suivants :

(1) un bain contenant de l'eau de Javel titrant 12° chlorimétriques, maintenu à 60° C;

(2) un bain contenant 10 g/l de détergent liquide de marque VIZIR® de la société Procter & Gamble maintenu à 100° C;

(3) un bain contenant 10 g/l de poudre à lessiver de la société Henkel, maintenu à 100° C.

La composition de ces bains a été renouvelée toutes les 24 heures. A l'issue des 500 heures d'immersion, les plaquettes, préalablement rincées ont été placées en étuve ventilée à 150° C et inspectées toutes les 24 heures.

Le temps, exprimé en jours, à l'issue duquel les plaquettes sont devenues cassantes, appelé ci-après "période d'induction" (PI), est consigné dans le Tableau I et permet d'apprécier de manière satisfaisante l'efficacité de la formule stabilisante.

TABLEAU I

Mesure de la PI après immersion des plaquettes pendant 500 heures dans

| | le bain (1) | le bain (2) | le bain (3) |
|---|---|---|---|
| PI(jours) | 43 | 50 | 73 |

Exemple 2 (comparaison)

On a préparé une composition polyoléfinique stabilisée de la même manière qu'à l'exemple 1 sauf qu'on n'y a pas incorporé de sulfure de zinc. Les périodes d'induction mesurées sur des plaquettes moulées et traitées en étuve comme à l'exemple 1 étaient, après immersion de 500 heures, respectivement dans les bains (1) à (3), de 2 jours, de 35 jours et de 40 jours.

On observe donc une diminution importante de la PI et donc une dégradation accélérée des plaquettes, particulièrement après immersion dans le bain (1) (eau de Javel).

Exemple 3

On a préparé une composition polyoléfinique stabilisée semblable à celle de l'exemple 1, sauf que l'on a remplacé le produit HPM 12 par une quantité équivalente d'isocyanurate de tris(2,6-diméthyl-3-hydroxy-4-tert-butyl)benzyle

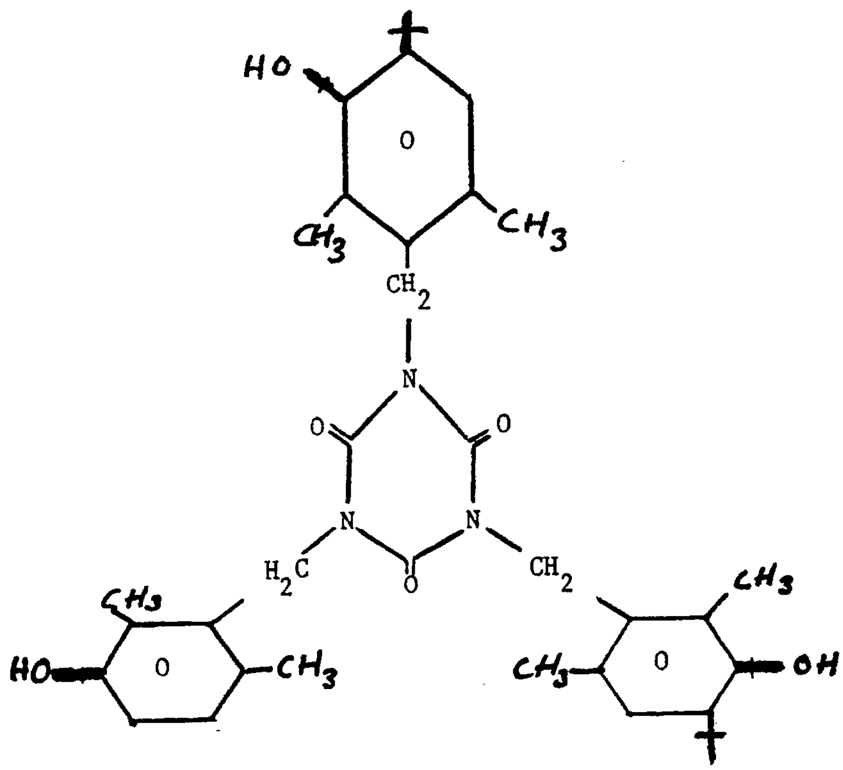

commercialisé par American Cyanamid sous la marque OYANOX®1790.

Les périodes d'induction, mesurées comme indiqué à l'exemple 1, sur des plaquettes moulées à partir de ces compositions et immergées dans les bains identifiés à l'exemple 1 dans les mêmes conditions, sont consignées dans le Tableau II ci-après.

TABLEAU II

Mesure de la PI après immersion des plaquettes pendant 500 heures dans

| | le bain (1)* | le bain (2)* | le bain (3)* |
|---|---|---|---|
| PI(jours) | 37 | 70 | 83 |

* voir exemple 1

Exemple 4 (comparatif)

On a préparé une composition polyoléfinique stabilisée de la même manière qu'à l'exemple 3 sauf qu'on n'y a pas incorporé de sulfure de zinc. Les périodes d'induction mesurées sur des plaquettes moulées et traitées en étuve comme à l'exemple 1 étaient, après immersion de 500 heures, respectivement dans les bains (1) à (3), de 2 jours, de 40 jours et de 58 jours.

Exemple 5

On a préparé une composition polyoléfinique stabilisée semblable à celle de l'exemple 1, sauf que l'on a remplacé le disulfure de distéaryle par 0,3 partie en poids de tétrakis(3-thiododécylpropionate) de

pentaérythritol

$[H_{25}C_{12} - S - (CH_2)_2 - COO - CH_2]_4\ C$

commercialisé par Shipro Kasei Kaisha sous la dénomination Seenox 412S.

Les périodes d'induction, mesurées comme indiqué à l'exemple 1, sur des plaquettes moulées à partir de cette composition et immergées dans les bains identifiés à l'exemple 1 dans les mêmes conditions, sont consignées dans le Tableau III ci-après.

TABLEAU III

Mesure de la PI après immersion des plaquettes pendant 500 heures dans

| | le bain (1)* | le bain (2)* | le bain (3)* |
|---|---|---|---|
| PI(jours) | 62 | 21 | 100 |

* voir exemple 1

Exemple 6

On a préparé une composition polyoléfinique stabilisée semblable à celle de l'exemple 5, sans incorporer toutefois de sulfure de zinc.

Les périodes d'induction, mesurées comme indiqué à l'exemple 1, sur des plaquettes moulées à partir de cette composition et immergées dans les bains identifiés à l'exemple 1 dans les mêmes conditions, sont consignées dans le Tableau IV ci-après.

TABLEAU IV

Mesure de la PI après immersion des plaquettes pendant 500 heures dans

| | le bain (1)* | le bain (2)* | le bain (3)* |
|---|---|---|---|
| PI(jours) | 55 | 30 | 70 |

* voir exemple 1

La comparaison des résultats des exemples 5 et 6 montre que l'absence de sulfure de zinc ne nuit pas de manière inacceptable à l'efficacité de la formulation stabilisante lorsqu'un ester dérivé de polyol aliphatique et d'acide alkylthiodipropionique (produit Seenox 412) est également présent, contrairement à ce qui se passe dans le cas de l'association du sulfure de zinc avec un polysulfure organique (comparaison des résultats des exemples 1 et 3 respectivement avec les exemples comparatifs 2 et 4).

Exemple 7

On a préparé une composition polyoléfinique stabilisée semblable à celle de l'exemple 5 sauf que l'on n'a pas incorporé le produit WESTON®626.

Les périodes d'induction, mesurées comme indiqué à l'exemple 1, sur des plaquettes moulées à partir de cette composition et immergées dans les bains identifiés à l'exemple 1 dans les mêmes conditions, sont consignées dans le Tableau V ci-après.

TABLEAU V

Mesure de la PI après immersion des plaquettes pendant 500 heures dans

| | le bain (1)* | le bain (2)* | le bain (3)* |
|---|---|---|---|
| PI(jours) | 67 | 22 | 104 |

* voir exemple 1

## Revendications

1. Compositions stabilisées à la dégradation par les liquides oxydants à base de polymères d'alpha-oléfines contenant
   - 0,001 à 10 % en poids d'un antioxydant phénolique (a),
   - 0,001 à 10 % en poids d'un phosphonite (b) et
   - 0,001 à 10 % en poids d'un stabilisant soufré (c),

   caractérisées en ce que le stabilisant soufré (c) est choisi parmi (c2) les associations d'un sulfure métallique (c21) avec un ester dérivé de polyols aliphatiques et d'acides alkylthiodipropioniques (c1) (c3) les associations d'un sulfure métallique (c21) avec un polysulfure organique (c22).

2. Compositions stabilisées selon la revendication 1, caractérisées en ce qu'elles sont à base d'un polymère du propylène.

3. Compositions stabilisées selon la revendication 1, caractérisées en ce que l'antioxydant phénolique (a) est choisi parmi les polyphénols alkylés et les polyesters phénoliques.

4. Compositions stabilisées selon la revendication 1, caractérisées en ce que le phosphonite (b) est choisi parmi les diphosphonites de polyphénylène et leurs dérivés substitués.

5. Compositions stabilisées selon la revendication 1, caractérisées en ce que le stabilisant soufré (c) est choisi parmi l'association (c2) d'un ester (c1) avec le sulfure de zinc.

6. Compositions stabilisées selon la revendication 1, caractérisées en ce que le stabilisant soufré (c) est choisi parmi l'association (c3) d'un disulfure de dialkyle avec le sulfure de zinc.

7. Compositions stabilisées selon la revendication 1, caractérisées en ce qu'elles contiennent en outre un phosphite organique (d).

8. Compositions stabilisées selon la revendication 7, caractérisées en ce que le phosphite organique (d) est choisi parmi les diphosphites cycliques dérivés du pentaérythritol.

9. Compositions stabilisées selon la revendication 1, caractérisées en ce qu'elles contiennent en outre un agent anti-acide (e).

10. Compositions stabilisées selon la revendication 9, caractérisées en ce que l'agent anti-acide (e) est le stéarate de calcium.

## Claims

1. Compositions stabilised against degradation by oxidising liquids, based on alpha-olefin polymers containing
   - 0.001 to 10% by weight of a phenolic antioxidant (a),
   - 0.001 to 10% by weight of a phosphonite (b) and
   - 0.001 to 10% by weight of a sulphur-containing stabiliser (c),

   characterised in that the sulphur-containing stabiliser (c) is chosen from
   (c2) combinations of a metal sulphide (c21) with an ester derived from aliphatic polyols and alkylthiodipropionic acids (c1)
   (c3) combinations of a metal sulphide (c21) with an organic polysulphide (c22).

2. Stabilised compositions according to Claim 1, characterised in that they are based on a propylene polymer.

3. Stabilised compositions according to Claim 1, characterised in that the phenolic antioxidant (a) is chosen from alkylated polyphenols and phenolic polyesters.

4. Stabilised compositions according to Claim 1, characterised in that the phosphonite (b) is chosen from polyphenylenediphosphonites and their substituted derivatives.

5. Stabilised compositions according to Claim 1, characterised in that the sulphur-containing stabiliser (c) is chosen from the combination (c2) of an ester (c1) with zinc sulphide.

6. Stabilised compositions according to Claim 1, characterised in that the sulphur-containing stabiliser (c) is chosen from the combination (c3) of a dialkyl disulphide with zinc sulphide.

7. Stabilised compositions according to Claim 1, characterised in that they additionally contain an organic phosphite (d).

8. Stabilised compositions according to Claim 7, characterised in that the organic phosphite (d) is chosen from cyclic diphosphites derived from pentaerythritol.

9. Stabilised compositions according to Claim 1, characterised in that they additionally contain an anti-acid agent (e).

10. Stabilised compositions according to Claim 9, characterised in that the anti-acid agent (e) is calcium stearate.

## Patentansprüche

1. Gegen Abbau durch oxidierende Flüssigkeiten stabilisierte Zusammensetzungen auf der Basis von Alpha-Olefinpolymeren, die
   0,001 bis 10 Gew.-% eines phenolischen Antioxidationsmittels (a)
   0,001 bis 10 Gew.-% eines Phosphonits (b) und
   0,001 bis 10 Gew.-% eines schwefelhaltigen Stabilisierungsmittels (c) enthalten,
   dadurch gekennzeichnet, daß das schwefelhaltige Stabilisierungsmittel (c) ausgewählt ist unter
   (c2) den Zusammenlagerungen eines Metallsulfids (c21) mit einem Esterderivat von aliphatischen Polyolen und Alkylthiodipropionsäuren (c1)
   (c3) den Zusammenlagerungen eines Metallsulfids (c21) mit einem organischen Polysulfid (c22).

2. Stabilisierte Zusammensetzungen nach Anspruch 1, dadurch gekennzeichnet, daß sie auf Basis eines Propylenpolymers sind.

3. Stabilisierte Zusammensetzungen nach Anspruch 1, dadurch gekennzeichnet, daß das phenolische Antioxidationsmittel (a) ausgewählt ist unter den alkylierten Polyphenolen und den phenolischen Polyestern.

4. Stabilisierte Zusammensetzungen nach Anspruch 1, dadurch gekennzeichnet, daß das Phosphonit (b) ausgewählt ist unter den Polyphenylen-Diphosphoniten und ihren substituierten Derivaten.

5. Stabilisierte Zusammensetzungen nach Anspruch 1, dadurch gekennzeichnet, daß das schwefelhaltige Stabilisierungsmittel (c) ausgewählt ist unter der Zusammenlagerung (c2) eines Ester (c1) mit dem Zinksulfid.

6. Stabilisierte Zusammensetzungen nach Anspruch 1, dadurch gekennzeichnet, daß das schwefelhaltige Stabilisierungsmittel (c) ausgewählt ist unter der Zusammenlagerung (c3) eines Dialkyldisulfids mit dem Zinksulfid.

7. Stabilisierte Zusammensetzungen nach Anspruch 1, dadurch gekennzeichnet, daß sie außerdem ein organisches Phosphit (d) enthalten.

8. Stabilisierte Zusammensetzungen nach Anspruch 7, dadurch gekennzeichnet, daß das organische Phosphit (d) ausgewählt ist unter den von Pentaerythrit abgeleiteten cyclischen Diphosphiten.

9. Stabilisierte Zusammensetzungen nach Anspruch 1, dadurch gekennzeichnet, daß die außerdem ein Anti-Säure-Mittel (e) enthalten.

10. Stabilisierte Zusammensetzungen nach Anspruch 9, dadurch gekennzeichnet, daß das Anti-Säure-Mittel (e) Kalziumstearat ist.